(19) Europäisches Patentamt
European Patent Office
Office européen des brevets

(11) EP 1 196 421 B1

(12) # FASCICULE DE BREVET EUROPEEN

(45) Date de publication et mention de la délivrance du brevet:
**29.10.2003 Bulletin 2003/44**

(21) Numéro de dépôt: **00945992.6**

(22) Date de dépôt: **23.06.2000**

(51) Int Cl.7: **C07F 1/00**, C07F 3/00, C07F 3/06, C07F 3/10, C08G 63/08

(86) Numéro de dépôt international:
**PCT/FR00/01753**

(87) Numéro de publication internationale:
**WO 01/000628 (04.01.2001 Gazette 2001/01)**

(54) **CATALYSEURS DE POLYMERISATION**

POLYMERISATIONSKATALYSATOREN

POLYMERISATION CATALYSTS

(84) Etats contractants désignés:
**AT BE CH CY DE DK ES FI FR GB GR IE IT LI LU MC NL PT SE**

(30) Priorité: **25.06.1999 EP 99401585**

(43) Date de publication de la demande:
**17.04.2002 Bulletin 2002/16**

(73) Titulaires:
- **SOCIETE DE CONSEILS DE RECHERCHES ET D'APPLICATIONS SCIENTIFIQUES (S.C.R.A.S.)**
  **75016 Paris (FR)**
- **CENTRE NATIONAL DE LA RECHERCHE SCIENTIFIQUE (CNRS)**
  **75794 Paris Cedex 16 (FR)**

(72) Inventeurs:
- **NGUYEN NOGOC, Hanh**
  **Cu Xa Dai Hoc Bach Khoa**
  **Tip Ho Chi Minh (VN)**
- **GORNITZKA, Heinz**
  **F-31400 Toulouse (FR)**
- **MARTIN-VACA, Blanca**
  **F-31400 Toulouse (FR)**
- **BOURISSOU, Didier**
  **F-31830 Plaisance du Touch (FR)**
- **BERTRAND, Guy**
  **F-31320 Pechbusque (FR)**
- **CAZAUX, Jean-Bernard**
  **F-30390 Aramon (FR)**

(74) Mandataire: **Bourgouin, André et al**
**Beaufour Ipsen - S.C.R.A.S.,**
**24, rue Erlanger**
**75781 Paris Cedex 16 (FR)**

(56) Documents cités:
**WO-A-97/42197**

- **PLAPPERT, ELIZABETH C. ET AL: "Synthesis and structural characterization of silver(I) compounds with nitrogen ligands" J. CHEM. SOC., DALTON TRANS. (1997), (12), 2119-2123, 1997, XP002119229**
- **CHEMICAL ABSTRACTS, vol. 101, no. 20, 12 novembre 1984 (1984-11-12) Columbus, Ohio, US; abstract no. 178337, GAMPP, HARALD: "Investigation of solution kinetics of transition-metal complexes by EPR spectroscopy" XP002119231 & INORG. CHEM. (1984), 23(22), 3645-9, 1984,**
- **CHEMICAL ABSTRACTS, vol. 93, no. 8, 25 août 1980 (1980-08-25) Columbus, Ohio, US; abstract no. 84415, MASSACESSI, M. ET AL: "Host-lattice effects on the electron spin resonance spectra of copper(II) complexes in diluted and undiluted forms" XP002119232 & J. MOL. STRUCT. (1980), 64, 269-76, 1980,**
- **BARBUCCI, ROLANDO ET AL: "Thermodynamic, electronic, and electron paramagnetic resonance investigation of the coordinating properties of 3-azaheptane-1,7,-diamine in aqueous solution" J. CHEM. SOC., DALTON TRANS. (1976), (14), 1321-5, 1976, XP002119230**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

**(Cont. page suivante)**

- CHEMICAL ABSTRACTS, vol. 81, no. 12, 23 septembre 1974 (1974-09-23) Columbus, Ohio, US; abstract no. 69184, PORZSOLT, EVA CS. ET AL: "Interaction of mercury(II) cyanide with ligands containing nitrogen as a donor atom" XP002119233 & MAGY. KEM. FOLY. (1974), 80(3), 127-32, 1974,

## Description

La présente invention concerne de nouveaux composés possédant un élément du groupe 12 et possédant un ligand tridentate, un procédé pour leur préparation et leur utilisation notamment en tant que catalyseurs de polymérisation.

On connaît l'utilisation des dérivés possédant un élément du groupe 12 mais possédant des ligands de type porphyrine (Inoue, Acc. Chem. Res., (1996) 29, 39) comme catalyseurs pour la polymérisation d'hétérocycles. Des systèmes catalytiques constitués d'un élément du groupe 13 et d'un ligand tridentate sont décrits dans WO97/42197.

Cependant il a été montré que chaque type de catalyseurs utilisés pour les polymérisations ou copolymérisations, donne respectivement des polymères ou des copolymères différents (Jedlinski et coll., Macromolecules, (1990) 191, 2287 ; Munson et coll., Macromolecules, (1996) 29, 8844 ; Montaudo et coll., Macromolecules, (1996) 29, 6461). Le problème est donc de trouver des systèmes catalytiques nouveaux afin d'obtenir de nouveaux polymères ou copolymères, et plus particulièrement des copolymères séquencés. L'utilisation de systèmes catalytiques permettant de contrôler l'enchaînement des monomères conduit à des copolymères spécifiques possédant des propriétés propres. Ceci est particulièrement intéressant pour les copolymères biocompatibles dont la biodégradation est influencée par cet enchaînement.

L'invention a ainsi pour objet les produits de formule générale 1

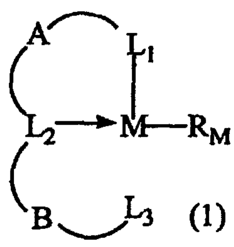 (1)

dans laquelle

| | |
|---|---|
| M | représente un élément du groupe 12 ; |
| $R_M$ | représente l'atome d'hydrogène, un atome d'halogène, ou un radical alkyle, cycloalkyle, aryle, alkoxy, cycloalkoxy, aryloxy, alkylthio, cycloalkylthio, arylthio, amino, alkylamino, dialkylamino, cycloalkylamino, di (cycloalkyl)amino, alkyl(cycloalkyl)amino, arylamino, diarylamino, alkylarylamino ou (cycloalkyl)arylamino ; |
| A et B | représentent, indépendamment, une chaîne carbonée de 2 à 4 atomes de carbone, optionellement substituée par un ou plusieurs des radicaux substitués (par un ou plusieurs substituants identiques ou différents) ou non substitués suivants : alkyle, cycloalkyle ou aryle, dans lesquels ledit substituant est un atome d'halogène, le radical alkyle, nitro ou cyano ; |
| $L_1$ et $L_2$ | représentent, indépendamment, un groupe de formule $-E_{15}(R_{15})-$ dans laquelle<br>$E_{15}$ est un élément du groupe 15 et<br>$R_{15}$ représente l'atome d'hydrogène ; l'un des radicaux substitués (par un ou plusieurs substituants identiques ou différents) ou non-substitués suivants : alkyle, cycloalkyle ou aryle, dans lesquels ledit substituant est un atome d'halogène, le radical alkyle, nitro ou cyano; un radical de formule $-E_{14}RR'R''$ dans laquelle $E_{14}$ est un élément du groupe 14 et R, R' et R" représentent, indépendamment, l'atome d'hydrogène ou l'un des radicaux substitués (par un ou plusieurs substituants identiques ou différents) ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule $-SO_2Q$ dans laquelle Q représente un atome d'halogène, un radical alkyle, haloalkyle ou aryle éventuellement substitué par un ou plusieurs substituants choisis parmi les radicaux alkyle, haloalkyle et halogène. |
| $L_3$ | représente indifféremment un groupe de formule $-E'_{15}(R'_{15})(R''_{15})$ ou $-E_{16}(R_{16})$ dans lesquelles<br>$E'_{15}$ est un élément du groupe 15 et<br>$E_{16}$ est un élément du groupe 16 et<br>$R'_{15}$, $R''_{15}$ et $R_{16}$ représentent, indépendamment, l'atome d'hydrogène ; l'un des radicaux substitués (par un ou plusieurs substituants identiques ou différents) ou non-substitués suivants : alkyle, cycloalkyle ou aryle, dans lesquels ledit substituant est un atome d'halogène, le radical alkyle, nitro ou cyano ; un radical de formule $-E'_{14}TT'T''$ dans laquelle $E'_{14}$ est un élément du groupe 14 et T, T' et T" représentent, indépendamment, l'atome d'hydrogène ou l'un des radicaux substitués (par un ou plusieurs substituants identiques ou différents) ou non-substitués suivants : alkyle, cycloalkyle, aryle, alkoxy, cycloalkoxy, aryloxy, alkylthio, |

cycloalkylthio ou arylthio, dans lesquels ledit substituant est un atome d'halogène, le radical alkyle, nitro ou cyano ; ou un radical de formule $-SO_2Q'$ dans laquelle Q' représente un atome d'halogène, un radical alkyle, haloalkyle ou aryle éventuellement substitué par un ou plusieurs substituants choisis parmi les radicaux alkyle, haloalkyle et halogène.

Dans les définitions indiquées ci-dessus, l'expression halogène représente un atome de fluor, de chlore, de brome ou d'iode, de préférence chlore. L'expression alkyle représente de préférence un radical alkyle ayant de 1 à 6 atomes de carbone linéaire ou ramifié et en particulier un radical alkyle ayant de 1 à 4 atomes de carbone tels que les radicaux méthyle, éthyle, propyle, isopropyle, butyle, isobutyle, sec-butyle et tert-butyle.

Le terme haloalkyle désigne de préférence les radicaux dans lesquels le radical alkyle est tel que défini ci-dessus et est substitué par un ou plusieurs atomes d'halogène tel que défini ci-dessus comme, par exemple, bromoéthyle, trifluorométhyle, trifluoroéthyle ou encore pentafluoroéthyle. Les radicaux alkoxy peuvent correspondre aux radicaux dans lesquels le radical alkyle est tel que défini ci-dessus. On préfère les radicaux méthoxy, éthoxy, isopropyloxy ou tert-butyloxy. Les radicaux alkylthio représentent de préférence les radicaux dans lesquels le radical alkyle est tel que défini ci-dessus comme, par exemple, méthylthio ou éthylthio. Les radicaux alkylamino et dialkylamino représentent de préférence les radicaux dans lesquels le radical alkyle est tel que défini ci-dessus comme, par exemple, méthylamino ou diméthylamino.

Les radicaux cycloalkyles sont choisis parmi les cycloalkyles monocycliques saturés ou insaturés. Les radicaux cycloalkyles monocycliques saturés peuvent être choisis parmi les radicaux ayant de 3 à 7 atomes de carbone tels que les radicaux cyclopropyle, cyclobutyle, cyclopentyle, cyclohexyle ou cycloheptyle. Les radicaux cycloalkyles insaturés peuvent être choisis parmi les radicaux cyclobutène, cyclopentène, cyclohexène, cyclopentadiène, cyclohexadiène. Les radicaux cycloalkoxy peuvent correspondre aux radicaux dans lesquels le radical cycloalkyle est tel que défini ci-dessus. On préfère les radicaux cyclopropyloxy, cyclopentyloxy ou cyclohexyloxy. Les radicaux cycloalkylthio peuvent correspondre aux radicaux dans lesquels le radical cycloalkyle est tel que défini ci-dessus comme par exemple cyclohexylthio. Les radicaux cycloalkylamino et di(cycloalkyl)amino peuvent correspondre aux radicaux dans lesquels le radical cycloalkyle est tel que défini ci-dessus comme par exemple cyclohexylamino et di(cyclohexyl)amino.

Les radicaux aryles peuvent être de type mono ou polycycliques. Les radicaux aryles monocycliques peuvent être choisis parmi les radicaux phényle optionellement substitué par un ou plusieurs radicaux alkyle, tel que tolyle, xylyle, mésityle, cuményle. Les radicaux aryles polycycliques peuvent être choisis parmi les radicaux naphtyle, anthryle, phénanthryle. Les radicaux aryloxy peuvent correspondre aux radicaux dans lesquels le radical aryle est tel que défini ci-dessus. On préfère les radicaux phénoxy, 2,4,6-tritertiobutylphénoxy, tolyloxy ou mésityloxy. Les radicaux arylthio désignent de préférence les radicaux dans lesquels le radical aryle est tel que défini ci-dessus comme par exemple dans phénylthio. Les radicaux arylamino et diarylamino désignent de préférence les radicaux dans lesquels le radical aryle est tel que défini ci-dessus comme, par exemple, phénylamino ou diphénylamino.

Les radicaux alkyl(cycloalkyl)amino peuvent correspondre aux radicaux dans lesquels les radicaux alkyle et cycloalkyle sont tels que défini ci-dessus comme, par exemple méthyl(cyclohexyl)amino. Les radicaux alkylarylamino désignent de préférence les radicaux dans lesquels les radicaux alkyle et aryle sont tels que défini ci-dessus comme, par exemple méthylphénylamino. Les radicaux (cycloalkyl)arylamino peuvent correspondre aux radicaux dans lesquels les radicaux cycloalkyle et aryle sont tels que défini ci-dessus comme, par exemple (cyclohexyl)phénylamino.

Les composés de formule 1 peuvent se présenter sous forme de monomère ou de dimère et plus particulièrement les composés de formule 1 dans laquelle M représente un atome de zinc se présentent généralement sous forme de dimère.

L'invention a plus particulièrement pour objet les produits de formule générale 1 telle que définie ci-dessus, caractérisée en ce que

RM représente un radical alkyle ;

A et B représentent, indépendamment, une chaîne carbonée de 2 à 4 atomes de carbone ;

$L_1$ et $L_2$ représentent, indépendamment, un radical de formule $-E_{15}(R_{15})-$ dans laquelle $E_{15}$ est un atome d'azote ou de phosphore et $R_{15}$ représente un atome d'hydrogène ou un radical de formule $-E_{14}RR'R''$ dans laquelle $E_{14}$ représente un atome de carbone ou de silicium et R,

R' et R'' représentent, indépendamment, l'atome d'hydrogène ou un radical alkyle ;

$L_3$ représente un radical de formule $-E'_{15}(R'_{15})(R''_{15})$ dans laquelle $E'_{15}$ est un atome d'azote ou de phosphore, et $R'_{15}$ et $R''_{15}$ représentent, indépendamment, un atome d'hydrogène ou un radical de formule $-E'_{14}TT'T''$ dans laquelle $E'_{14}$ représente un atome de carbone ou de silicium et T, T' et T'' représentent, indépendamment, l'atome d'hydrogène ou un radical alkyle.

De préférence, M représente un atome de zinc. De préférence également, $R_M$ représente un radical méthyle ; A et B représentent, indépendamment, une chaîne carbonée de 2 atomes de carbone ; $L_1$ et $L_2$ représentent, indépendamment, un radical de formule $-E_{15}(R_{15})-$ dans laquelle $E_{15}$ est un atome d'azote et $R_{15}$ représente un atome d'hydrogène, un radical méthyle, éthyle, propyle, isopropyle ou un radical de formule $-E_{14}RR'R''$ dans laquelle $E_{14}$

représente un atome de silicium et R, R' et R'' représentent, indépendamment, l'atome d'hydrogène ou un radical méthyle, éthyle, propyle ou isopropyle ; $L_3$ représente un radical de formule $-E'_{15}(R'_{15})(R''_{15})$ dans laquelle $E'_{15}$ est un atome d'azote, et $R'_{15}$ et $R''_{15}$ représentent, indépendamment, un atome d'hydrogène, un radical méthyle, éthyle, propyle, isopropyle ou un radical de formule $-E'_{14}TT'T''$ dans laquelle $E'_{14}$ représente un atome de silicium et T, T' et T'' représentent, indépendamment, l'atome d'hydrogène ou un radical méthyle, éthyle, propyle ou isopropyle.

Plus particulièrement, l'invention a pour objet les produits décrits ci-après dans les exemples, notamment les produits répondant aux formules suivantes :

- $[Me_3SiN(H)CH_2CH_2N(Me)CH_2CH_2NSiMe_3]ZnMe$ ;

- $[Me_3SiN(H)CH_2CH_2N(H)CH_2CH_2NSiMe_3]ZnMe$.

L'invention a également pour objet un procédé de préparation des produits de formule générale 1 telle que définie ci-dessus, caractérisé en ce que l'on fait réagir un produit de formule I

$$(L_1\text{-}A\text{-}L_2\text{-}B\text{-}L_3)^-, Y^+ \qquad (I)$$

dans laquelle $L_1$, A, $L_2$, B et $L_3$ ont les significations indiquées ci-dessus et Y représente l'atome d'hydrogène, un métal ou un groupement métallique, avec un produit de formule II

$$MR_MZ \qquad (II)$$

dans laquelle M et $R_M$ ont les significations indiquées ci-dessus et Z représente un groupe partant, pour obtenir un produit de formule 1 telle que définie ci-dessus.

La réaction d'un composé de formule générale I avec un composé de formule générale II pour obtenir un composé de formule générale I, peut être réalisée sous atmosphère inerte telle sous atmosphère de fréon ou d'argon, dans un solvant aprotique, à une température comprise entre -90 et +50° C. Les composés 1 ainsi obtenus sont purifiés par les méthodes classiques de purification.

En tant que solvant aprotique, on peut utiliser les hydrocarbures aromatiques tels que benzène, toluène; des hydrocarbures aliphatiques tels que pentane, heptane, hexane, cyclohexane ; des éthers tels que le diéthyléther, dioxane, tétrahydrofurane, éthyltertiobutyl éther.

Dans les composés I, Y représente l'atome d'hydrogène, un métal ou un groupement métallique. Le groupement métallique est un composé de formule $R'''M_1$ ou $R'''_3M_2$ dans laquelle R''' représente un atome d'halogène, ou indifféremment, un radical alkyle, cycloalkyle, aryle, alkoxy, cycloalkoxy ou aryloxy définis comme précédemment, $M_1$ est un atome de zinc ou de mercure ou un alcalino-terreux tel que le magnésium et $M_2$ un atome d'étain ou de plomb ; de préférence, le groupement métallique est choisi parmi les groupements MgBr, ZnMe, $SnMe_3$, $SnBu_3$ ou $PbMe_3$. Le métal peut être un métal alcalin choisi parmi le lithium, le sodium ou le potassium.

Dans les composés II, Z représente un groupe choisi parmi un atome d'halogène, un groupement alkyle, cycloalkyle, alkoxy, aryle, aryloxy, amino, alkylamino ou dialkylamino défini comme précédemment, ou encore un méthanesulphonyloxy, un benzènesulphonyloxy, p-toluènesulphonyloxy.

Les produits de départ de formule I sont des produits connus ou peuvent être préparés à partir de produits connus. Pour leur synthèse, on peut citer les références suivantes : Cloke et coll., J. Chem. Soc., Dalton Trans. (1995) 25; Wilkinson and Stone, Comprehensive Organometallic Chemistry (1982) vol. 1, 557.

Les produits de formule II sont commerciaux ou peuvent être fabriqués par les méthodes connues de l'homme de métier.

L'invention a également pour objet l'utilisation des produits de formule 1 telle que définie ci-dessus, en tant que catalyseurs pour la mise en oeuvre de (co)polymérisation, c'est à dire de polymérisation ou copolymérisation. Lors de la mise en oeuvre de (co)polymérisation, les composés selon l'invention jouent également le rôle d'initiateur et/ou de régulateur de chaînes.

Les composés de formule 1 sont particulièrement intéressants pour la mise en oeuvre de polymérisation d'hétérocycles. Les hétérocycles peuvent contenir un ou plusieurs hétéroatomes des groupes 15 et/ou 16, et posséder une taille allant de trois à huit chaînons. A titre d'exemple d'hétérocycles répondant à la formulation ci-avant, on peut citer les époxydes, les thioépoxydes, les esters ou thioesters cycliques tels que les lactones, les lactames et les anhydrides.

Les composés de formule 1 sont particulièrement intéressants également pour la mise en oeuvre de (co) polymérisation d'esters cycliques. A titre d'exemple d'esters cycliques, on peut citer les esters cycliques polymères de l'acide lactique et/ou glycolique. Des copolymères statistiques ou séquencés peuvent être obtenus selon que les monomères sont introduits ensemble au début de la réaction, ou séquentiellement au cours de la réaction.

L'invention a également pour objet un procédé de préparation de copolymères, séquencés ou aléatoires, ou de polymères qui consiste à mettre en présence un ou plusieurs monomères, un initiateur et/ou un régulateur de chaînes, un catalyseur de polymérisation et éventuellement un solvant de polymérisation, le dit procédé caractérisé en ce que l'initiateur et/ou le régulateur de chaînes et le catalyseur de polymérisation sont représentés par le même composé qui est choisi parmi les composés de formule (1) telle que définie ci-dessus.

La (co)polymérisation peut s'effectuer soit en solution soit en surfusion. Lorsque la (co)polymérisation s'effectue en solution, le solvant de la réaction peut être le (ou l'un des) substrat(s) mis en oeuvre dans la réaction catalytique. Des solvants qui n'interfèrent pas avec la réaction catalytique elle-même, conviennent également. A titre d'exemple de tels solvants, on peut citer les hydrocarbures saturés ou aromatiques, les éthers, les halogénures aliphatiques ou aromatiques.

Les réactions sont conduites à des températures comprises entre la température ambiante et environ 250° C : la plage de température comprise entre 40 et 200° C s'avère plus avantageuse. Les durées de réaction sont comprises entre quelques minutes et 300 heures, et de préférence entre 5 minutes et 72 heures.

Ce procédé de (co)polymérisation convient particulièrement bien pour l'obtention de (co)polymères d'esters cycliques, notamment les esters cycliques polymères de l'acide lactique et/ou glycolique. Les produits obtenus tels que le copolymère lactique glycolique, biodégradables, sont avantageusement utilisés comme support dans des compositions thérapeutiques à libération prolongée. Le procédé convient particulièrement bien également à la polymérisation des époxydes, notamment de l'oxyde de propène. Les polymères obtenus sont des composés qui peuvent être utilisés pour la synthèse de cristaux liquides organiques ou encore comme membranes semi-perméables.

Les exemples suivants sont présentés pour illustrer les procédures ci-dessus.

**Exemple 1 :** $[Me_3SiN(H)CH_2CH_2N(H)CH_2CH_2NSiMe_3]ZnMe$ (sous forme de dimère)

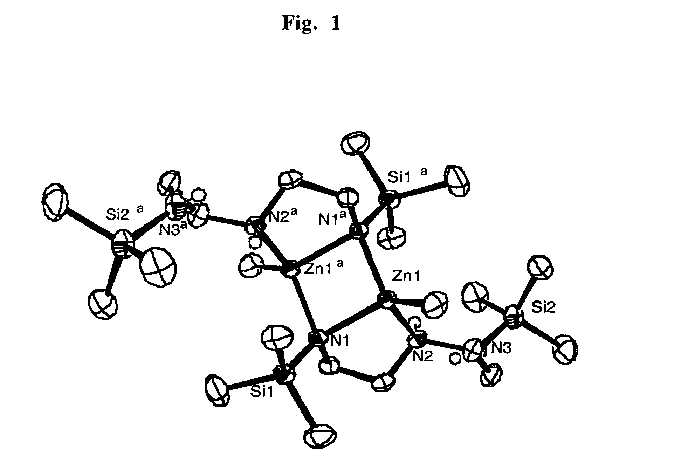

Dans un tube de Schlenk muni d'un barreau aimanté et purgé sous argon, on introduit successivement 4,3 g (17,7 mmol) de $[(Me_3SiN(H)CH_2CH_2)_2NH]$ et 30 ml de toluène. Le mélange réactionnel est refroidi à -78° C, puis on introduit 8,8 ml (17,7 mmol) d'une solution 2M de $ZnMe_2$ dans le toluène. Le mélange réactionnel est ramené à température ambiante puis laissé sous agitation pendant 18 heures à température ambiante. Après évaporation du solvant, une huile orange est obtenue. Le composé souhaité est isolé sous forme de cristaux incolores par cristallisation à -20° C dans du pentane (5 ml) (rendement 50 %). Ce composé est caractérisé par spectroscopie de résonance magnétique multinucléaire et diffraction des rayons-X (Figure 1 et Tableau 1 ci-dessous).

**Exemple 2 :** $[Me_3SiN(H)CH_2CH_2N(Me)CH_2CH_2NSiMe_3]ZnMe$ (sous forme de dimère)

Dans un tube de Schlenk muni d'un barreau aimanté et purgé sous argon, on introduit successivement 1,1 g (4,2 mmol) de $[(Me_3SiN(H)CH_2CH_2)_2NMe]$ et 20 ml de toluène.

Le mélange réactionnel est refroidi à -78° C, puis on introduit 2,1 ml (4,2 mmol) d'une solution 2M de $ZnMe_2$ dans le toluène. Le mélange réactionnel est ramené à température ambiante puis laissé sous agitation pendant 3 heures à température ambiante. Après évaporation du solvant, une huile orange est obtenue. Le composé souhaité est isolé sous forme de cristaux blancs par cristallisation à -20° C dans du pentane (5 ml) (rendement 50 %). Ce composé est caractérisé par spectroscopie de résonance magnétique multinucléaire.

**Exemple 3 :** préparation d'un poly(D,L-lactide)

Dans un tube de Schlenk muni d'un barreau aimanté et purgé sous argon, on introduit successivement 0,045 g (0,14 mmol) de $[Me_3SiN(H)CH_2CH_2\text{-}N(H)CH_2CH_2NSiMe_3]ZnMe$ et 100 ml de toluène. Le mélange réactionnel est porté à 80° C. 6,24 g (43,2 mmol) de D,L-lactide sont alors additionnés. Le mélange réactionnel est laissé sous agitation à 80° C pendant 42 heures. Le polymère est caractérisé par RMN du carbone et du proton ; la conversion du monomère est de 96 %. Selon une analyse par GPC (Gel Permea Chromatography) à l'aide d'un étalonnage réalisé à partir de standards de polystyrène (PS) de masses 761 à 400000, l'échantillon est composé de polymères ayant des masses élevées (Mw = 40400 Dalton).

**Exemple 4 :** préparation d'un copolymère (D,L-lactide / glycolide) séquencé

Dans un tube de Schlenk muni d'un barreau aimanté et purgé sous argon, on introduit successivement 0,15 g (0,43 mmol) de $[Me_3SiN(H)CH_2CH_2\text{-}N(Me)CH_2CH_2NSiMe_3]ZnMe$, 3,50 g (24 mmol) de D,L-lactide et 80 ml de toluène. Le mélange réactionnel est laissé sous agitation à 85° C pendant 18 heures. Une analyse par RMN du proton permet de vérifier que la conversion du monomère est supérieure à 94 %. A la solution précédente maintenue sous agitation à 80° C sont ajoutés sur une période de 11 jours 2,25 g (19,4 mmol) de glycolide. L'analyse d'un aliquot par RMN du proton montre qu'un copolymère est formé. Le rapport des intégrales des signaux correspondant à la partie polylactide (5,20 ppm) et polyglycolide (4,85 ppm) est de 4/1. Selon une analyse par GPC, à l'aide d'un étalonnage réalisé à partir de standards de PS de masses 761 à 400000, ce copolymère est un mélange de macromolécules ayant des masses voisines (Mw/Mn = 1,63 ; Mw = 2960 Dalton).

**Exemple 5 :** préparation d'un copolymère (D,L-lactide / glycolide) aléatoire

Dans un tube de Schlenk muni d'un barreau aimanté et purgé sous argon, on introduit successivement 0,05 g (0,15 mmol) de $[Me_3SiN(H)CH_2CH_2\text{-}N(Me)CH_2CH_2NSiMe_3]ZnMe$, 6,66 g (45 mmol) de D,L-lactide et 1,53 g (13 mmol) de glycolide. Le mélange réactionnel est chauffé à 180° C pendant 2 heures. Le polymère est caractérisé par RMN du proton ; la conversion des monomères est totale. Le rapport des intégrales des signaux correspondant à la partie polylactide (5,20 ppm) et polyglycolide (4,85 ppm) est de 4/1. Selon une analyse par GPC, à l'aide d'un étalonnage réalisé à partir de standards de PS de masses 761 à 400000, l'échantillon est composé de polymères ayant une polydispersité (Mw/Mn) de 2,27 et des masses (Mw) de 16271 Dalton.

**Exemple 6 :** préparation d'un copolymère (D,L-lactide / glycolide) aléatoire ayant une composition lactide/ glycolide proche de 70/30

Dans un tube de Schlenk muni d'un barreau aimanté et purgé sous argon, on introduit successivement 0,024 g (0,073 mmol) de $[Me_3SiN(H)CH_2CH_2\text{-}N(H)CH_2CH_2NSiMe_3]ZnMe$, 1,98 g (13,6 mmol) de D,L-lactide et 0,68 g (5,8 mmol) de glycolide. Le mélange réactionnel est laissé sous agitation à 180° C pendant 2 heures. Une analyse par RMN du proton permet de vérifier que la conversion des monomère est de 98 % de lactide et 100% de glycolide. Le rapport des intégrales des signaux correspondants à la partie polylactide (5,20 ppm) et polyglycolide (4,85 ppm) permet d'évaluer la composition du copolymère à 65% de lactide et 35% de glycolide. Selon une analyse par GPC, à l'aide d'un étalonnage réalisé à partir de standards de PS de masses 761 à 400000, ce copolymère est un mélange de macromolécules (Mw/Mn = 2,84) de masses élevées (Mw = 34500 Dalton).

Tableau 1 :

| **Longueurs des liaisons sélectionnées (en Angström) et angles de liaison (en degré) pour le composé de l'exemple 1** | | | |
|---|---|---|---|
| Zn(1)-C(1) | 1,989(2) Å | C(5)-C(6) | 1,519 (3) Å |
| Zn(1)-N(1) | 2,086(2) Å | C(6)-N(2) | 1,475 (3) Å |
| Zn(1)-N(2) | 2,145 (2) Å | N(2)-C(7) | 1,472 (3) Å |
| Zn(1)-N(1A) | 2,084 (2) Å | N(2)-C(7) | 1,472 (3) Å |
| N(1)-Si(1) | 1,725 (2) Å | C(7)-C(8) | 1,519 (3) Å |
| N(3)-Si(2) | 1.711 (2) Å | C(8)-N(3) | 1,453 (3) Å |
| N(1)-C(5) | 1.483 (3) Å | | |
| N(1)-Zn(1)-N(2) | 85,1(1) ° | Si(1)-N(1)-Zn(1) | 119,5 (1) (2) ° |
| N(1)-Zn(1)-C(1) | 129,2 (1) ° | Si(1)-N(1)-Zn(1A) | 120,8 (1) ° |
| N(1)-Zn(1)-N(1A) | 93,7 (1) ° | Si(1)-N(1)-C(5) | 112,7 (1) ° |
| N(2)-Zn(1)-C(1) | 112,1 (1) ° | Zn(1)-N(1)-Zn(1A) | 86,3 (1) ° |
| N(2)-Zn(1)-N(1A) | 109,4 (4) ° | Zn(1)-N(1)-C(5) | 106,2 (1) ° |
| C(1)-Zn(1)-N(1A) | 120,1 (1) ° | Zn(1A)-N(1)-C(5) | 108,0 (1) ° |

## Revendications

1. Composés de formule générale 1

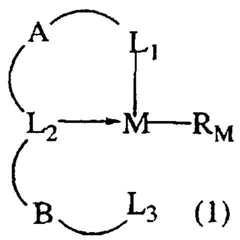

dans laquelle

M représente un élément du groupe 12 ;

$R_M$ représente l'atome d'hydrogène, un atome d'halogène, ou un radical alkyle, cycloalkyle, aryle, alkoxy, cycloalkoxy, aryloxy, alkylthio, cycloalkylthio, arylthio, amino, alkylamino, dialkylamino, cycloalkylamino, di(cycloalkyl)amino, alkyl(cycloalkyl)amino, arylamino, diarylamino, alkylarylamino ou (cycloalkyl) ayylamino ;

A et B représentent, indépendamment, une chaîne carbonée de 2 à 4 atomes de carbone, optionellement substituée par un ou plusieurs des radicaux substitués ou non substitués suivants : alkyle, cycloalkyle ou aryle, dans lesquels ledit substituant est un atome d'halogène, le radical alkyle, nitro ou cyano ;

$L_1$ et $L_2$ représentent, indépendamment, un groupe de formule $-E_{15}(R_{15})-$ dans laquelle
$E_{15}$ est un élément du groupe 15 et
$R_{15}$ représente l'atome d'hydrogène ; l'un des radicaux substitués ou non-substitués suivants : alkyle, cycloalkyle ou aryle, dans lesquels ledit substituant est un atome d'halogène, le radical alkyle, nitro ou cyano ; un radical de formule $-E_{14}RR'R''$ dans laquelle $E_{14}$ est un élément du groupe 14 et R, R' et R'' représentent, indépendamment, l'atome d'hydrogène ou l'un des radicaux substitués (par un ou plusieurs substituants identiques ou différents) ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule $-SO_2Q$ dans laquelle Q représente un atome d'halogène, un radical alkyle, haloalkyle ou aryle éventuellement substitué par un ou plusieurs substituants choisis parmi les radicaux alkyle, haloalkyle et halogène ;

$L_3$ représente indifféremment un groupe de formule $-E'_{15}(R'_{15})(R''_{15})$ ou $-E_{16}(R_{16})$ dans lesquelles
$E'_{15}$ est un élément du groupe 15 et
$E_{16}$ est un élément du groupe 16 et
$R'_{15}$, $R''_{15}$ et $R_{16}$ représentent, indépendamment, l'atome d'hydrogène ; l'un des radicaux substitués (par un ou plusieurs substituants identiques ou différents) ou non-substitués suivants : alkyle, cycloalkyle ou aryle, dans lesquels ledit substituant est un atome d'halogène, le radical alkyle, nitro ou cyano ; un radical de formule $-E'_{14}TT'T''$ dans laquelle $E'_{14}$ est un élément du groupe 14 et T, T' et T'' représentent, indépendamment, l'atome d'hydrogène ou l'un des radicaux substitués (par un ou plusieurs substituants identiques ou différents) ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule $-SO_2Q'$ dans laquelle Q' représente un atome d'halogène, un radical alkyle, haloalkyle ou aryle éventuellement substitué par un ou plusieurs substituants choisis parmi les radicaux alkyle, haloalkyle et halogène.

2. Composés de formule 1 telle que définie à la revendication 1, **caractérisés en ce qu'**ils se présentent sous forme de monomère ou de dimère.

3. Composés de formule générale 1 telle que définie à l'une des revendications 1 à 2, **caractérisés en ce que**
$R_M$ représente un groupe alkyle ;
A et B représentent, indépendamment, une chaîne carbonée de 2 à 4 atomes de carbone ;
$L_1$ et $L_2$ représentent, indépendamment, un radical de formule $-E_{15}(R_{15})-$ dans laquelle $E_{15}$ est un atome d'azote ou de phosphore et $R_{15}$ représente un atome d'hydrogène ou un radical de formule $-E_{14}RR'R''$ dans laquelle $E_{14}$ représente un atome de carbone ou de silicium et R,
R' et R'' représentent, indépendamment, l'atome d'hydrogène ou un radical alkyle ;
$L_3$ représente un radical de formule $-E'_{15}(R'_{15})(R''_{15})$ dans laquelle $E'_{15}$ est un atome d'azote ou de phosphore, et $R'_{15}$ et $R''_{15}$ représentent, indépendamment, un atome d'hydrogène ou un radical de formule $-E'_{14}TT''T''$ dans

laquelle $E'_{14}$ représente un atome de carbone ou de silicium et T, T' et T'' représentent, indépendamment, l'atome d'hydrogène ou un radical alkyle.

4. Composés de formule générale 1 telle que définie à l'une des revendications 1 à 3, **caractérisée en ce que** M représente un atome de zinc.

5. Composés de formule générale 1 telle que définie à l'une des revendications 1 à 4, **caractérisée en ce que**
$R_M$ représente un radical méthyle ;
A et B représentent, indépendamment, une chaîne carbonée de 2 atomes de carbone ;
$L_1$ et $L_2$ représentent, indépendamment, un radical de formule $-E_{15}(R_{15})-$ dans laquelle $E_{15}$ est un atome d'azote et $R_{15}$ représente un atome d'hydrogène, un radical méthyle, éthyle, propyle, isopropyle ou un radical de formule $-E_{14}RR'R''$ dans laquelle $E_{14}$ représente un atome de silicium et R, R' et R'' représentent, indépendamment, l'atome d'hydrogène ou un radical méthyle, éthyle, propyle ou isopropyle ;
$L_3$ représente un radical de formule $-E'_{15}(R'_{15})(R''_{15})$ dans laquelle $E'_{15}$ est un atome d'azote, et $R'_{15}$ et $R''_{15}$ représentent, indépendamment, un atome d'hydrogène, un radical méthyle, éthyle, propyle, isopropyle ou un radical de formule $-E'_{14}TT'T''$ dans laquelle $E'_{14}$ représente un atome de silicium et T, T' et T'' représentent, indépendamment, l'atome d'hydrogène ou un radical méthyle, éthyle, propyle ou isopropyle.

6. Composés de formule générale 1 telle que définie à l'une des revendications 1 à 4 et répondant aux formules suivantes :

- $[Me_3SiN(H)CH_2CH_2N(Me)CH_2CH_2NSiMe_3]ZnMe$ ;

- $[Me_3SiN(H)CH_2CH_2N(H)CH_2CH_2NSiMe_3]ZnMe$.

7. Composés de formule 1 telle que définie à la revendication 6, **caractérisés en ce qu'**ils se présentent sous forme de dimère.

8. Procédé de préparation des produits de formule générale 1 telle que définie à la revendication 1, **caractérisé en ce que** l'on fait réagir un produit de formule I

$$(L_1\text{-}A\text{-}L_2\text{-}B\text{-}L_3)^-,\ Y^+ \qquad \text{(I)}$$

dans laquelle $L_1$, A, $L_2$, B et $L_3$ ont les significations indiquées à la revendication 1 et Y représente l'atome d'hydrogène, un métal ou un groupement métallique de formule $R'''M_1$ ou $R'''_3M_2$ dans laquelle R''' représente un atome d'halogène, un radical alkyle, cycloalkyle, aryle, alkoxy, cycloalkoxy ou aryloxy, $M_1$ est un atome de zinc ou de mercure ou un alcalino-terreux et $M_2$ un atome d'étain ou de plomb, avec un produit de formule II

$$MR_MZ \qquad \text{(II)}$$

dans laquelle M et $R_M$ ont les significations indiquées à la revendication 1 et Z représente un groupe partant choisi parmi un atome d'halogène, un groupement alkyle, cycloalkyle, alkoxy, aryle, aryloxy, amino, alkylamino, dialkylamino, un méthanesulphonyloxy, un benzènesulphonyloxy, p-toluènesulphonyloxy, pour obtenir un produit de formule 1.

9. Utilisation des produits de formule 1 telle que définie à l'une quelconque des revendications 1 à 7, en tant que catalyseur de polymérisation ou copolymérisation.

10. Utilisation selon la revendication 9 pour la polymérisation ou copolymérisation d'hétérocycles.

11. Utilisation selon la revendication 9, pour la polymérisation ou copolymérisation d'esters cycliques.

12. Utilisation selon la revendication 11, pour la polymérisation ou copolymérisation d'esters cycliques polymères de

l'acide lactique et/ou glycolique.

**13.** Procédé de préparation de copolymères, séquencés ou aléatoires, ou de polymères qui consiste à mettre en présence un ou plusieurs monomères, un initiateur et/ou un régulateur de chaînes, un catalyseur de polymérisation et éventuellement un solvant de polymérisation, à une température comprise entre la température ambiante et 250° C, pendant une durée comprise entre quelques minutes et 300 heures, ledit procédé **caractérisé en ce que** l'initiateur et/ou le régulateur de chaînes et le catalyseur de polymérisation sont représentés par le même composé qui est choisi parmi les composés selon les revendications 1 à 7.

**14.** Procédé selon la revendication 13, **caractérisé en ce que** le monomère est choisi parmi les époxydes ou les esters cycliques.

**15.** Procédé selon la revendication 14, **caractérisé en ce que** les esters cycliques sont les esters cycliques polymères de l'acide lactique et/ou glycolique.

## Patentansprüche

**1.** Verbindung der allgemeinen Formel 1

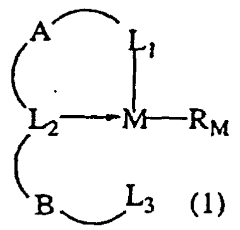

(1)

in der
M ein Element der Gruppe 12 darstellt;
$R_M$ ein Wasserstoffatom, ein Halogenatom oder einen der Reste Alkyl, Cycloalkyl, Aryl, Alkoxy, Cycloalkoxy, Aryloxy, Alkylthio, Cycloalkylthio, Arylthio, Amino, Alkylamino, Dialkylamino, Cycloalkylamino, Di(cycloalkyl)amino, Alkyl-(cycloalkyl)amino, Arylamino, Diarylamino, Alkylarylamino oder (Cycloalkyl)arylamino darstellt;
A und B unabhängig voneinander eine kohlenstoffhaltige Kette mit 2 bis 4 Kohlenstoffatomen darstellen, die gegebenenfalls durch einen oder mehrere der folgenden substituierten oder nicht substituierten Reste substituiert ist: Alkyl, Cycloalkyl oder Aryl, in denen dieser Substituent ein Halogenatom oder ein Alkyl-, Nitro- oder Cyanrest ist;
$L_1$ und $L_2$ unabhängig voneinander eine Gruppe der Formel $-E_{15}(R_{15})-$ darstellen, in der
$E_{15}$ ein Element der Gruppe 15 ist und
$R_{15}$ darstellt: ein Wasserstoffatom; einen der folgenden substituierten oder nicht substituierten Reste: Alkyl, Cycloalkyl oder Aryl, in denen dieser Substituent ein Halogenatom oder ein Alkyl-, Nitro- oder Cyanrest ist; einen Rest der Formel $-E_{14}RR'R''$, in der $E_{14}$ ein Element der Gruppe 14 ist und R, R' und R" unabhängig voneinander ein Wasserstoffatom oder einen der folgenden (durch einen oder mehrere gleiche oder verschiedene Substituenten) substituierten oder nicht substituierten Reste darstellen: Alkyl, Cycloalkyl, Aryl, Alkoxy, Cycloalkoxy, Aryloxy, Alkylthio, Cycloalkylthio oder Arylthio, in denen dieser Substituent ein Halogenatom oder ein Alkyl-, Nitro- oder Cyanrest ist; oder einen Rest der Formel $-SO_2Q$, in der Q ein Halogenatom oder einen Alkyl-, Halogenalkyl- oder Arylrest darstellt, der ggf. durch einen oder mehrere Substituenten substituiert ist, die aus den Resten Alkyl, Halogenalkyl und Halogen ausgewählt sind;
$L_3$ unterschiedslos eine Gruppe der Formel $-E'_{15}(R'_{15})(R''_{15})$ oder $-E_{16}(R_{16})$ ist, in denen
$E'_{15}$ ein Element der Gruppe 15 ist und
$E_{16}$ ein Element der Gruppe 16 ist und
$R'_{15}$, $R''_{15}$ und $R_{16}$ unabhängig voneinander darstellen: ein Wasserstoffatom; einen der folgenden (durch einen oder mehrere gleiche oder verschiedene Substituenten) substituierten oder nicht substituierten Reste: Alkyl, Cycloalkyl oder Aryl, in denen dieser Substituent ein Wasserstoffatom oder ein Alkyl-, Nitro- oder Cyanrest ist; einen Rest der Formel $-E'_{14}TT'T''$, in der $E'_{14}$ ein Element der Gruppe 14 ist und T, T' und T" unabhängig voneinander ein Wasserstoffatom oder einen der folgenden (durch einen oder mehrere gleiche oder verschiedene Substituenten) substituierten oder nicht substituierten Reste darstellen: Alkyl, Cycloalkyl, Aryl, Alkoxy, Cycloalkoxy, Aryloxy,

Alkylthio, Cycloalkylthio oder Arylthio, in denen der Substituent ein Halogenatom oder ein Alkyl-, Nitro- oder Cyanrest ist; oder einen Rest der Formel $-SO_2Q'$, in der Q' ein Halogenatom oder einen Alkyl-, Halogenalkyl- oder Arylrest darstellt, der ggf. durch einen oder mehrere Substituenten substituiert ist, die aus den Alkyl-, Halogenalkyl- und Halogenresten ausgewählt sind.

**2.** Verbindungen der allgemeinen Formel 1 gemäß Anspruch 1, **dadurch gekennzeichnet, daß** sie in Monomer- oder Dimerform vorliegen.

**3.** Verbindungen der allgemeinen Formel 1 gemäß einem der Ansprüche 1 bis 2, **dadurch gekennzeichnet, daß**
$R_M$ eine Alkylgruppe darstellt;
A und B unabhängig voneinander eine kohlenstoffhaltige Kette von 2 bis 4 Kohlenstoffatomen darstellen;
$L_1$ und $L_2$ unabhängig voneinander einen Rest der Formel
$-E_{15}(R_{15})-$ darstellen, in der $E_{15}$ ein Stickstoff- oder Phosphoratom ist und $R_{15}$ ein Wasserstoffatom oder einen Rest der Formel $-E_{14}RR'R''$ darstellt, in der $E_{14}$ ein Kohlenstoffoder Siliciumatom darstellt und R, R' und R'' unabhängig voneinander ein Wasserstoffatom oder einen Alkylrest darstellen;
R' und R'' unabhängig voneinander ein Wasserstoffatom oder einen Alkylrest darstellen;
$L_3$ einen Rest der Formel $-E'_{15}(R'_{15})(R''_{15})$ darstellt, in der $E'_{15}$ ein Stickstoff- oder Phosphoratom ist und $R'_{15}$ und $R''_{15}$ unabhängig voneinander ein Wasserstoffatom oder einen Rest der Formel $-E'_{14}TT'T''$ darstellen, in der $E'_{14}$ ein Kohlenstoff- oder Siliciumatom darstellt und T, T' und T'' unabhängig voneinander ein Wasserstoffatom oder einen Alkylrest darstellen.

**4.** Verbindungen der allgemeinen Formel 1 gemäß einem der Ansprüche 1 bis 3, **dadurch gekennzeichnet, daß** M ein Zinkatom darstellt.

**5.** Verbindungen der allgemeinen Formel 1 gemäß einem der Ansprüche 1 bis 4, **dadurch gekennzeichnet, daß**
$R_M$ einen Methylrest darstellt;
A und B unabhängig voneinander eine kohlenstoffhaltige Kette mit 2 Kohlenstoffatomen darstellen;
$L_1$ und $L_2$ unabhängig voneinander einen Rest der Formel $-E_{15}(R_{15})-$ darstellen, in der $E_{15}$ ein Stickstoffatom ist und $R_{15}$ ein Wasserstoffatom, einen der Reste Methyl, Ethyl, Propyl, Isopropyl oder einen Rest der Formel $-E_{14}RR'R''$ darstellt, in der $E_{14}$ ein Siliciumatom darstellt und R, R' und R'' unabhängig voneinander ein Wasserstoffatom oder einen der Reste Methyl, Ethyl, Propyl oder Isopropyl darstellen; $L_3$ einen Rest der Formel $-E'_{15}(R'_{15})(R''_{15})$ darstellt, in der $E'_{15}$ ein Stickstoffatom ist und $R'_{15}$ und $R''_{15}$ unabhängig voneinander ein Wasserstoffatom, einen der Reste Methyl, Ethyl, Propyl, Isopropyl oder einen Rest der Formel $-E'_{14}TT'T''$ darstellen, in der $E'_{14}$ ein Siliciumatom darstellt und T, T' und T'' unabhängig voneinander ein Wasserstoffatom oder einen der Reste Methyl, Ethyl, Propyl oder Isopropyl darstellen.

**6.** Verbindungen der allgemeinen Formel 1 gemäß einem der Ansprüche 1 bis 4, die der folgenden Formel entsprechen:

$$- [Me_3SiN (H) CH_2CH_2N(Me)CH_2CH_2NSiMe_3]ZnMe;$$

$$- [Me_3SiN(H)CH_2CH_2N(H)CH_2CH_2NSiMe_3]ZnMe;$$

**7.** Verbindungen der allgemeinen Formel 1 gemäß Anspruch 6, **dadurch gekennzeichnet, daß** sie in Dimerform vorliegen.

**8.** Verfahren zur Herstellung der Produkte der allgemeinen Formel 1 gemäß Anspruch 1, **dadurch gekennzeichnet, daß** man ein Produkt der Formel I

$$(L_1\text{-}A\text{-}L_2\text{-}B\text{-}L_3)^-, Y^+ \qquad (I)$$

in der $L_1$, A, $L_2$, B und $L_3$ die in Anspruch 1 angegebenen Bedeutungen haben und Y ein Wasserstoffatom, ein Metall oder eine Metallgruppe der Formel $R'''M_1$ oder $R'''_3M_2$ darstellt, in der R''' ein Halogenatom oder einen der Reste Alkyl, Cycloalkyl, Aryl, Alkoxy, Cycloalkoxy oder Aryloxy darstellt, $M_1$ ein Zink- oder Quecksilberatom oder ein Erdalkali und $M_2$ ein Zinn- oder Bleiatom ist, mit einem Produkt der Formel II

II) $MR_MZ$ (II)

in der M und $R_M$ die in Anspruch 1 angegebenen Bedeutungen haben und Z eine Abgangsgruppe darstellt, die aus einem Halogenatom und einer der Gruppen Alkyl, Cycloalkyl, Alkoxy, Aryl, Aryloxy, Amino, Alkylamino, Dialkylamino, einem Methansulfonyloxy, einem Benzolsulfonyloxy, einem p-Toluolsulfonyloxy ausgewählt ist, reagieren läßt, um ein Produkt der Formel 1 zu erhalten.

**9.** Verwendung von Produkten der Formel 1 gemäß einem der Ansprüche 1 bis 7 in Form eines Polymerisations- oder Copolymerisationskatalysators.

**10.** Verwendung nach Anspruch 9 für die Polymerisation oder Copolymerisation von Heterocyclen.

**11.** Verwendung nach Anspruch 9 für die Polymerisation oder Copolymerisation von cyclischen Estern.

**12.** Verwendung nach Anspruch 11 für die Polymerisation oder Copolymerisation von polymeren cyclischen Estern der Milchund/oder Glykolsäure.

**13.** Verfahren zur Herstellung von Block- oder statistischen Copolymeren oder Polymeren, das darin besteht, daß ein oder mehrere Monomere, ein Initiator und oder Kettenregler, ein Polymerisationskatalysator und ggf. ein Polymerisationslösungsmittel bei einer Temperatur zwischen der Raumtemperatur und 250°C während einer Zeit zwischen einigen Minuten und 300 Stunden zusammengebracht werden, wobei dieses Verfahren **dadurch gekennzeichnet ist, daß** der Initiator und/oder der Kettenregler und der Polymerisationskatalysator von derselben Verbindung dargestellt werden, die aus den Verbindungen nach einem der Ansprüche 1 bis 7 ausgewählt ist.

**14.** Verfahren nach Anspruch 13, **dadurch gekennzeichnet, daß** das Monomer aus den Epoxiden oder den cyclischen Estern ausgewählt ist.

**15.** Verfahren nach Anspruch 14, **dadurch gekennzeichnet, daß** die cyclischen Ester die polymeren cyclischen Ester der Milch- und/oder Glykolsäure sind.

## Claims

**1.** Compounds of general formula 1

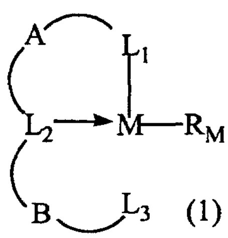
(1)

in which

| | |
|---|---|
| M | represents an element of group 12; |
| $R_M$ | represents the hydrogen atom, a halogen atom, or an alkyl, cycloalkyl, aryl, alkoxy, cycloalkoxy, aryloxy, alkylthio, cycloalkylthio, arylthio, amino, alkylamino, dialkylamino, cycloalkylamino, di(cycloalkyl) amino, alkyl(cycloalkyl)amino, arylamino, diarylamino, alkylarylamino or (cycloalkyl)arylamino radical; |
| A and B | represent, independently, a carbon chain of 2 to 4 carbon atoms, optionally substituted by one or more of the following substituted or non-substituted alkyl, cycloalkyl or aryl radicals, in which said substituent is a halogen atom, an alkyl, nitro or cyano radical; |

$L_1$ and $L_2$ represent, independently, a group of formula $-E_{15}(R_{15})-$ in which
$E_{15}$ is an element of group 15 and
$R_{15}$ represents the hydrogen atom; one of the following substituted or non-substituted alkyl, cycloalkyl or aryl radicals, in which said substituent is a halogen atom, an alkyl, nitro or cyano radical; a radical of formula $-E_{14}RR'R''$ in which $E_{14}$ is an element of group 14 and R, R' and R'' represent, independently, the hydrogen atom or one of the following substituted (by one or more identical or different substituents) or non-substituted alkyl, cycloalkyl, aryl, alkoxy, cycloalkoxy, aryloxy, alkylthio, cycloalkylthio or arylthio radicals, in which said substituent is a halogen atom, the alkyl, nitro or cyano radical; or a radical of formula $-SO_2Q$ in which Q represents a halogen atom, an alkyl, haloalkyl or aryl radical optionally substituted by one or more substituents chosen from the alkyl, haloalkyl and halogen radicals;

$L_3$ indifferently represents a group of formula $-E'_{15}(R'_{15})(R''_{15})$ or $-E_{16}(R_{16})$ in which
$E'_{15}$ is an element of group 15 and
$E_{16}$ is an element of group 16 and
$R'_{15}$, $R''_{15}$ and $R_{16}$ represent, independently, the hydrogen atom; one of the following substituted (by one or more identical or different substituents) or non-substituted alkyl, cycloalkyl or aryl radicals, in which said substituent is a halogen atom, the alkyl, nitro or cyano radical; a radical of formula $-E'_{14}TT'T''$ in which $E'_{14}$ is an element of group 14 and T, T' and T'' represent, independently, the hydrogen atom or one of the following substituted (by one or more identical or different substituents) or non-substituted alkyl, cycloalkyl, aryl, alkoxy, cycloalkoxy, aryloxy, alkylthio, cycloalkylthio or arylthio radicals, in which said substituent is a halogen atom, the alkyl, nitro or cyano radical; or a radical of formula $-SO_2Q'$ in which Q' represents a halogen atom, an alkyl, haloalkyl or aryl radical optionally substituted by one or more substituents chosen from the alkyl, haloalkyl and halogen radicals.

2. Compounds of formula 1 as defined in claim 1, **characterised in that** they are presented in the form of a monomer or a dimer.

3. Compounds of general formula 1 as defined in one of claims 1 to 2, **characterised in that** $R_M$ represents an alkyl group;
A and B represent, independently, a carbon chain of 2 to 4 carbon atoms;
$L_1$ and $L_2$ represent, independently, a radical of formula $-E_{15}(R_{15})-$ in which $E_{15}$ is a nitrogen or phosphorus atom and $R_{15}$ represents a hydrogen atom or a radical of formula $-E_{14}RR'R''$ in which $E_{14}$ represents a carbon or silicon atom and R, R' and R'' represent, independently, the hydrogen atom or an alkyl radical;
$L_3$ represents a radical of formula $-E'_{15}(R'_{15})(R''_{15})$ in which $E'_{15}$ is a nitrogen or phosphorus atom, and $R'_{15}$ and $R''_{15}$ represent, independently, a hydrogen atom or a radical of formula $-E'_{14}TT'T''$ in which $E'_{14}$ represents a carbon or silicon atom and T, T' and T'' represent, independently, the hydrogen atom or an alkyl radical.

4. Compounds of general formula 1 as defined in one of claims 1 to 3, **characterized in that** M represents a zinc atom.

5. Compounds of general formula 1 as defined in one of claims 1 to 4, **characterized in that** $R_M$ represents a methyl radical;
A and B represent, independently, a carbon chain of carbon atoms;
$L_1$ and $L_2$ represent, independently, a radical of formula $-E_{15}(R_{15})-$ in which $E_{15}$ is a nitrogen atom and $R_{15}$ represents a hydrogen atom, a methyl, ethyl, propyl, isopropyl radical or a radical of formula $-E_{14}RR'R''$ in which $E_{14}$ represents a silicon atom and R, R' and R'' represent, independently, the hydrogen atom or a methyl, ethyl, propyl or isopropyl radical;
$L_3$ represents a radical of formula $-E'_{15}(R'_{15})(R''_{15})$ in which $E'_{15}$ is a nitrogen atom, and $R'_{15}$ and $R''_{15}$ represent, independently, a hydrogen atom, a methyl, ethyl, propyl, isopropyl radical or a radical of formula $-E'_{14}TT'T''$ in which $E'_{14}$ represents a silicon atom and T, T' and T'' represent, independently, the hydrogen atom or a methyl, ethyl, propyl or isopropyl radical.

6. Compounds of general formula 1 as defined in one of claims 1 to 4 and corresponding to the following formulae:

- $[Me_3SiN(H)CH_2CH_2N(Me)CH_2CH_2NSiMe_3]ZnMe$;

- $[Me_3SiN(H)CH_2CH_2N(H)CH_2CH_2NSiMe_3]ZnMe$.

**7.** Compounds of formula 1 as defined in claim 6, **characterised in that** they are presented in dimer form.

**8.** Process for the preparation of the products of general formula I as defined in claim 1, **characterized in that** a product of formula I

$$(L_1\text{-}A\text{-}L_2\text{-}B\text{-}L_3)\text{-}\ ,\ Y^+ \qquad (I)$$

in which $L_1$, A, $L_2$, B and $L_3$ have the meanings indicated in claim 1 and Y represents the hydrogen atom, a metal or a metallic group of formula $R'''M_1$ or $R'''_3M_2$ in which R''' represents a halogen atom, an alkyl, cycloalkyl, aryl, alkoxy, cycloalkoxy or aryloxy radical, $M_1$ is a zinc or mercury atom or an alkaline-earth and $M_2$ a tin or lead atom, is reacted with a product of formula II

$$MR_MZ \qquad (II)$$

in which M and $R_M$ have the meanings indicated in claim 1 and Z represents a parting group selected from halogen atom, an alkyl, cycloalkyl, alkoxy, aryl, aryloxy, amino, alkylamino, dialkylamino, methanesulphonyloxy, benzenesulphonyloxy, p-toluenesulphonyloxy group, in order to obtain a product of formula 1.

**9.** Use of the products of formula 1 as defined in any one of claims 1 to 7, as polymerization or copolymerization catalyst.

**10.** Use according to claim 9 for the polymerization or copolymerization of heterocycles.

**11.** Use according to claim 9, for the polymerization or copolymerization of cyclic esters.

**12.** Use according to claim 11, for the polymerization or copolymerization of cyclic esters of lactic and/or glycolic acid.

**13.** Process for the preparation of block or random copolymers, or polymers which consist of bringing into contact with one or more monomers, a chain initiator and/or a regulator, a polymerization catalyst and optionally a polymerization solvent, at a temperature comprised between ambient temperature and 250° C, for a duration comprised between a few minutes and 300 hours, said process **characterized in that** the chain initiator and/or the regulator and the polymerization catalyst are represented by the same compound which is chosen from the compounds according to claims 1 to 7.

**14.** Process according to claim 13, **characterized in that** the monomer is chosen from the epoxides or the cyclic esters.

**15.** Process according to claim 14, **characterized in that** the cyclic esters are the polymer cyclic esters of lactic and/or glycolic acid.

Fig. 1